# EUROPEAN PATENT APPLICATION

(11) **EP 4 417 832 A1**
(43) Date of publication of application: **21.08.2024**
(21) Application number: 23156812.2
(22) Date of filing: 15.02.2023
(51) Int. Cl.: F16D 65/00, F16D 65/092

(54) **A BRAKE PAD ASSEMBLY**

(71) Applicant: Polestar Performance AB, 405 31 Gothenburg (SE)
(72) Inventor: MARTIN, Felipe, Solihull, B90 1PB (GB)
(74) Representative: Zacco Sweden AB

(57) **Abstract**

The present disclosure relates to a brake pad assembly (1) for a disc brake of a vehicle comprising a back plate (2) comprising an outer surface (2a) and an opposing inner surface (2b). Further, the brake pad assembly (1) comprises a shim plate (3) and a friction pad (4) associated with said inner surface (2b). Furthermore, the shim plate (3) is at least partially embedded in said back plate (2), wherein the shim plate (3) is positioned intermediate the friction pad (4) and the outer surface (2a) of the back plate (2).

## Description

### TECHNICAL FIELD

The present disclosure relates to a brake pad assembly, a vehicle comprising such an assembly, a method for manufacturing a brake pad assembly and the use of a brake pad assembly in a vehicle.

### BACKGROUND

During a braking operation of a vehicle, typically initiated by the driver pressing the brake pedal, pressure (e.g., hydraulic) forces brake pads to squeeze against a disc associated to each wheel that slows down the vehicle by the help of friction.

Conventionally, a vehicle brake pad assembly comprises a friction material, a back plate and a shim. The friction material is arranged to engage a disc to generate friction to reduce the speed of the vehicle. The shim plate is typically used to help the back plate of the brake assembly to absorb noise, vibration and harshness. The brake pad assembly is typically fitted to the caliper structure to, by means of the friction pad, make contact to the disc during a braking operation.

A common issue with conventional brake pad assemblies is that they usually are subject to corrosion and misalignment. Further, conventional brake pad assemblies are also bulky/heavy.

In other words, the brake pad assemblies in the present art are inefficient in several aspects. Preferably, the brake pad assemblies in the current art should improve in at least one of:
- Weight
- Compactness
- Fitting accuracy
- Resistance to corrosion.

Based on the aforementioned points, the brake pad assemblies of the present art should be improved in dimensional and quality aspects.

Thus, there is room for brake pad assemblies in the present art to explore the domain of providing a brake pad assembly that is improved in terms of dimferrensional and quality aspects.

Thus, even though previous solutions may work well in some situations, it would be desirable to provide a brake pad assembly that address requirements related to improving quality and dimensional aspects of said brake pad assembly.

### SUMMARY

It is therefore an object of the present disclosure to alleviate at least some of the mentioned drawbacks to provide an improved brake pad assembly that is improved in at least one of weight reduction, compactness and has an increased resistance to corrosion. In other words, it is an object of the present disclosure to provide a brake pad assembly being improved in quality and dimensional aspects.

These and other objects, which will become apparent in the following, are achieved by brake pad assembly, a method of manufacturing a brake pad assembly and a vehicle comprising such, as defined in the appended claims.

The present disclosure relates to a brake pad assembly for a disc brake arrangement of a vehicle. The brake pad assembly comprises a back plate comprising an outer surface and an opposing inner surface (forming a thickness therebetween). The brake pad assembly further comprises a shim plate and a friction pad (for contacting a rotor disc) associated with/in direct/indirect contact with said inner surface. Further, the shim plate is at least partially embedded in said back plate and is positioned intermediate the friction pad and the outer surface of the back plate.

An advantage of the brake pad assembly (BPA) of the present disclosure is that the BPA is more compact and reduced in weight compared to conventional brake pad assemblies.

An additional advantage is that, as the shim plate is embedded in the back plate, there is a reduced risk of delamination, due to corrosion and misalignment of the shim plate from the back plate and the friction pad. The embedding reduces the risk of the shim plate to be misaligned.

As noted herein the back plate comprises opposing surfaces. Further, the back plate may comprise a perimeter edge connecting the surfaces.

The back plate may be formed by a first material and wherein the shim plate is formed by a second material different from the first material.

The shim plate may be arranged to reduce noise, vibration and harshness (NVH) and may be referred to as an NVH isolator.

Further, in some aspects herein, the shim plate is formed by a metallic material, an alloy material, a polymer i.e. rubber or any combination thereof, and wherein the back plate is formed by a composite material. The composite material may be a carbon fiber composite, natural fiber composite, glass fiber composite, graphene composite, Kevlar/Aramid composite or any other suitable composite material. These composite materials may be non-metallic.

An advantage of having a back plate formed by a composite material and an at least partially embedded shim plate formed by a metal is that all components of the brake pad assembly can function according to requirements while also mitigating/eliminating the risk of corrosion. The back plate will not be subject to any corrosion and the shim plate, being at least partially embedded in the back plate will be prevented/having reduced exposure to ambient air which reduces the risk of corrosion. I.e. no or little corrosion particles can develop and be emitted.

An additional advantage of an aspect in which the shim plate is formed by/comprises a ferromagnetic metal is that it enables the retention of current magnetic handlers in the manufacturing line. Accordingly, even though the back plate in such an aspect is non-metallic, the current magnetic handlers of the manufacturing line can be maintained. Thus, the brake pad assembly according to some aspects of the disclosure herein allows for convenient implementation of the brake pad assembly herein into existing manufacturing lines.

An additional advantage of the disclosure herein, specifically by at least partially embedding the shim plate into the back plate and using a composite material as the back plate is that the reduced weight provided by the brake assembly according to aspects herein provides for increased battery range if implemented in an electric vehicle (EV). Also, it may, as a consequence of its improved compactness, enable introduction of additional elements to the suspension and brakes system without compromising performance while being environmentally friendly.

In some aspects herein, the shim plate is fully embedded in said back plate. In other words, the shim plate may be fully surrounded by the mass of the back plate. Accordingly, there is no risk for the shim plate to be exposed to ambient elements. Hence, there is no risk of corrosion of the shim plate providing a more environmentally friendly BPA. Further, the weight of the brake pad assembly is further reduced.

The shim plate may be positioned intermediate said inner surface and said outer surface of said back plate. This may hold both in aspects herein when the shim plate is fully embedded in said back plate and in aspects where the shim plate is partially embedded in said back plate.

The back plate may comprise at least one slot, wherein at least a part of the shim plate protrudes from said slot or wherein said slot exposes at least a part of said shim plate. This may improve the magnetic handling of the brake pad assembly in the manufacturing line.

In some aspects of the disclosure herein, the back plate may comprise a receiving cavity constrained/delimited by said inner surface of said back plate. The shim plate may be accommodated by said receiving cavity such that the friction pad is attachable to said shim plate. Preferably, the receiving cavity is dimensioned to correspond to at least 70% of an outer contour of said shim plate. Accordingly, the shim plate in such an aspect may also be hidden from ambient air as it is accommodated by the cavity and covered by the friction pad.

The receiving cavity may form a depth being equal to or greater than a thickness of said shim plate.

Further, in some aspects herein, a shim surface of said shim plate extends over at least 70 percent of any of the surfaces of said back plate. However, in some aspects the shim surface may be extending 50-70 percent. In other words, the area of the inner/outer surface of the back plate may be greater than the area of the shim surface. Shim surfaces of the shim may be flat.

Further, a contact surface of said friction pad may extend over at least 70 percent of any of the surfaces of said back plate.

Further, a thickness of the brake pad assembly may be defined by a space between a contact surface of said friction pad and the outer surface of said back plate. In some aspects, if the surfaces of the friction pad/back plate are uneven, it may be defined by the maximum space/distance between said contact surface and outer surface.

There is further provided a vehicle comprising the brake pad assembly according to any aspect herein.

Moreover, there is provided a method for manufacturing the brake pad assembly of any aspect herein, comprising the steps of:
- providing a shim plate
- moulding, by a moulding apparatus, at least a layer of said back plate (by providing back plate material) wherein the layer of the back plate forms at least a part of a final thickness of said back plate;
- placing the shim plate on said layer;
- providing friction material onto the back plate and/or the shim plate;
- curing the friction material and the at least one layer of the back plate.

In some aspects of the disclosure, prior to the step of providing, the method comprises the step of moulding at least an additional layer of said back plate, thereby fully embedding the shim plate within said back plate for fully surrounding the shim plate with mass of the back plate.

There is also provided use of the brake pad assembly according to any aspect herein.

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present disclosure will now be further clarified and described in more detail, with reference to the appended drawings;
- Figure 1: illustrates an objective view of a BPA in accordance with some aspects of the present disclosure;
- Figure 2A: illustrates a side width view of a BPA in accordance with some aspects of the present disclosure;
- Figure 2B: illustrates a side length view of a BPA in accordance with some aspects of the present disclosure;
- Figure 3A: illustrates an objective view of a BPA in accordance with some aspects of the present disclosure;
- Figure 3B: illustrates a top view of a BPA in which the shim plate is exploded, in accordance with some aspects of the present disclosure;
- Figure 4A: illustrates a method, in the form of a flowchart, for manufacturing a BPA in accordance with some aspects of the present disclosure;
- Figure 4B: illustrates a vehicle comprising at least one BPA in accordance with some aspects of the present disclosure; and
- Figure 5: illustrates a caliper structure in accordance with examples of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

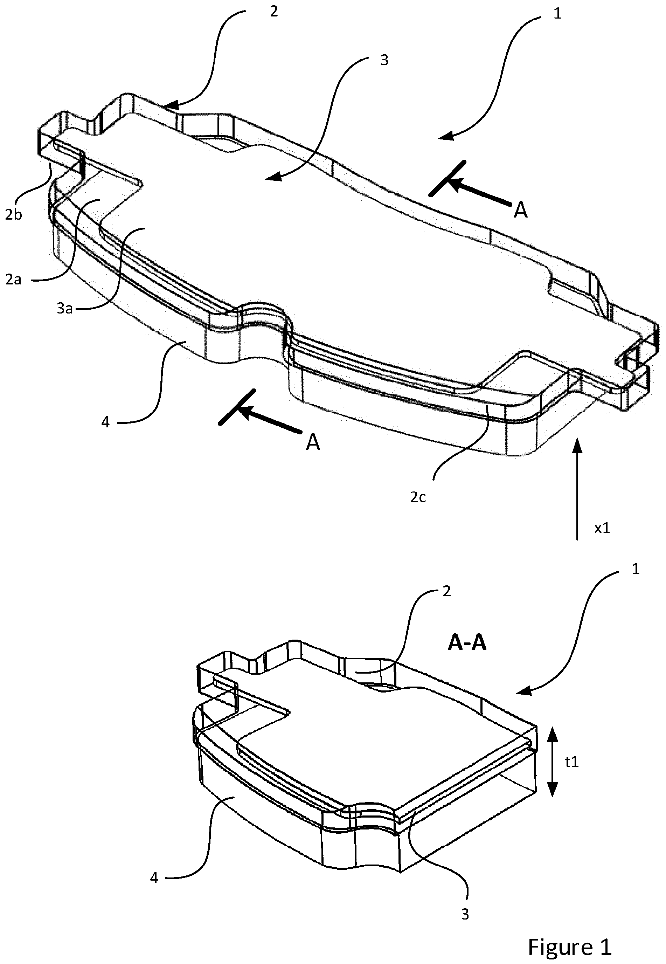

Figure 1 illustrates an objective view of a brake pad assembly 1 and a cross-sectional view A-A of said brake pad assembly 1. Figure 1 illustrates that the BPA comprises a back plate 2 comprising an outer surface 2a and an opposing inner surface 2b. Figure 1 further illustrates that the BPA 1 may comprise a perimeter edge 2c adjoining the surfaces 2a, 2b. Further, BPA comprises a shim plate 3 and a friction pad 4 associated with said inner surface 2b. The friction pad 4 may be directly or indirectly attached to said inner surface 2b. Thus, the term "associated with" may refer to that the friction pad is in direct or indirect contact with at least parts of said inner surface 2b. As illustrated in Figure 1, the inner surface 2b is closer to the friction pad 4 compared to the outer surface 2a.

Figure 1 further illustrates, specifically in the cross-sectional view A-A that the shim plate 3 is fully embedded in said back plate 2. However, it should be noted that in some aspects herein the shim plate 3 may be partially embedded in said back plate 2. Partially embedded may refer to that the shim plate is at least partially exposed to ambient elements, such as the friction pad, or ambient air. Thus, fully embedded may refer to that the shim plate is only exposed to the (inner mass of) the back plate 2. As illustrated, the shim plate 3 is, in the first direction x1, positioned intermediate the friction pad 4 and the outer surface 2a of the back plate 2. The first direction x1 may be perpendicular to surfaces 2a, 2b of the BPA 1. The positioning of the shim plate 3 as illustrated in Figure 1 allows for it to be more properly secured to the back plate. Specifically, in some aspects as illustrated in Figure 1, the shim plate 3 may be positioned intermediate said inner surface 2b and said outer surface 2a of said back plate 2. This may be realized irrespective of if the shim plate 3 is fully or partially embedded.

As illustrated in Figure 1, and appreciated by the disclosure herein, the back plate 2 and the shim plate 3 are two different pieces/units. In aspects herein, the back plate 2 is formed by a first material and the shim plate 3 is formed by a second material different from the first material. The first material may be a non-metallic material and/or a non-metallic composite. The second material may be a metallic material, an alloy material, a polymer i.e. rubber or a combination of them in part or in full. In some aspects herein, the first and the second materials are the same. The friction pad may be formed by a third material different from both the first and the second material.

The back plate 2 may comprise at least one slot (not shown), wherein at least a part of the shim plate 3 protrudes from said slot or wherein said slot exposes at least a part of said shim plate 3 to ambient elements such as ambient air or the friction pad.

Further referring to Figure 1, the shim surface 3a of said shim plate 3 may extend over at least 70 percent of any of the surfaces 2a, 2b of said back plate 2. The shim surface 3a may be the surface that is delimited by the perimeter of the shim plate 3.

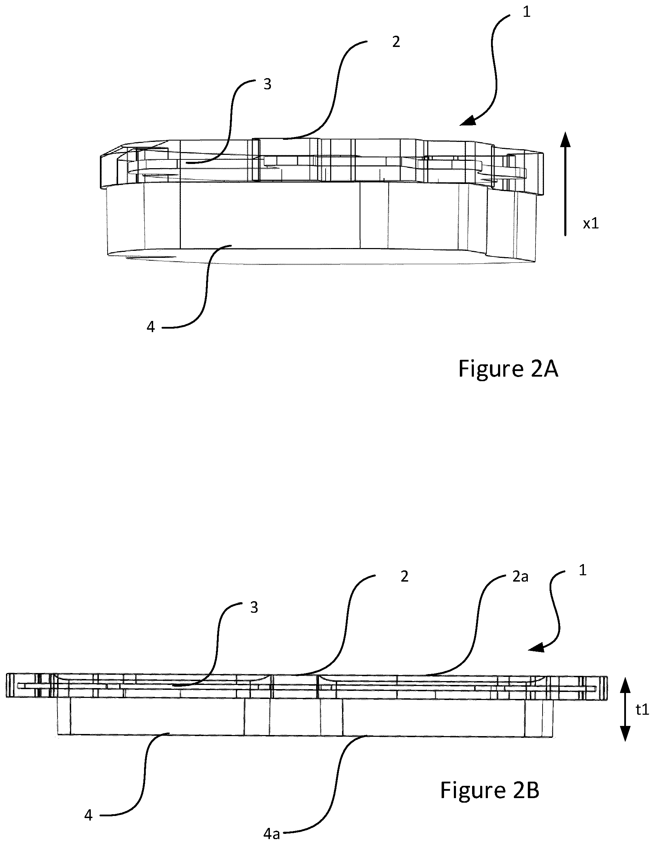

Figures 2A and 2B illustrates side views of the BPA 1 in accordance with some aspects herein. Figure 2A illustrates a side view depicting a width of the BPA 1 and Figure 2B illustrates a side view depicting a length of the BPA 1. Figures 2A-2B illustrate that the shim plate 3 is fully embedded in the back plate 2. Figure 2B illustrates that a thickness t1 of the BPA 1 is defined by a space between a contact surface 4a of said friction pad 4 and the outer surface 2a of said back plate 2. The back plate outer surface 2a may be flat as illustrated in Figure 2B.

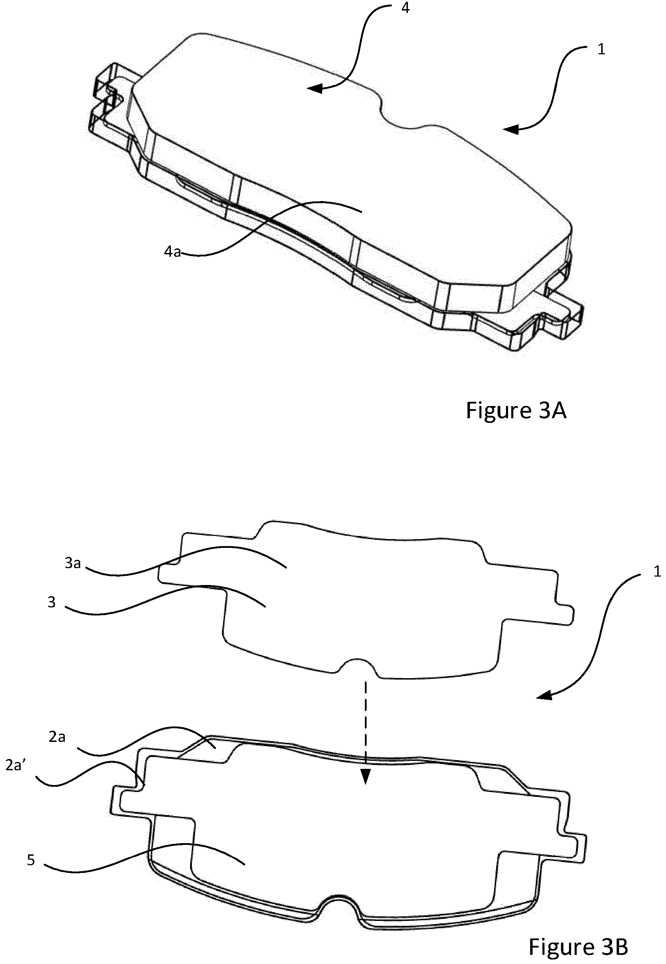

Figure 3A illustrates an objective view of the BPA 1 in which the friction pad 4 is shown at the top. Figure 3A illustrates that a contact surface 4a of said friction pad 4 extends over at least 70 percent of any of the surfaces 2a, 2b (not shown in Figure 3A, see Figure 1) of said back plate 2.

Figure 3B illustrates a top exploded view of the BPA 1 in accordance with some aspects herein. Figure 3B illustrates that the BPA 1 comprises a receiving cavity 5 constrained by said inner surface 2a of said back plate 2. Specifically, constrained by an inner perimeter 2a' of said inner surface 2a of said back plate 2. Accordingly, the shim plate 3 may be arranged to be accommodated by said receiving cavity 5 such that the friction pad 4 is attachable to said shim plate 3 (shim surface thereof 3a) from a top, preferably the receiving cavity 5 is dimensioned to correspond to at least 70% of an outer contour of said shim plate 3 for securing the shim plate 3 in an improved manner. As illustrated in Figure 3B, the friction pad 4 may be arranged to cover the exposed surface of the shim plate 3. Thus, when assembled, the shim plate 3 is only exposed to the friction pad 4 (hence being partially embedded in said back plate 2).

The receiving cavity 5 may form a depth being equal to or greater than a thickness of said shim plate.

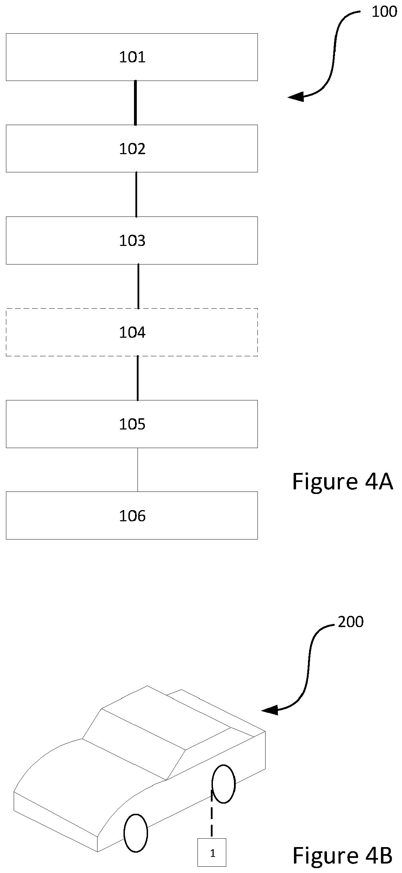

Figure 4A, schematically in the form of a flowchart illustrates a method 100 for manufacturing a BPA. Figure 4A illustrates that the method 100 may comprise the steps of providing 101 a shim plate. Moulding 102, by a moulding apparatus, at least a layer of said back plate wherein the layer of the back plate forms at least a part of a final thickness of said back plate. Further, the method 100 comprises positioning/placing 103 the shim plate on said back plate. I.e. placing the shim plate on the formed layer of the back plate. Further, the method 100 comprises providing 105 a friction material onto the back plate and/or the shim plate. Further, the method comprises curing 106 the friction material and the at least one layer.

The method 100 may further comprise the step of prior to the step of providing 105, moulding 104 at least an additional layer of said back plate, thereby fully embedding the shim plate within said back plate.

Figure 4B illustrates a vehicle 200. The vehicle 200 comprising at least one brake pad assembly 1 in accordance with any aspect of the present disclosure. However, the vehicle 200 may comprise a plurality (at least two) BPA 1. Thus, a vehicle 1 may comprise one or a pair of brake pad assemblies per wheel/caliper structure.

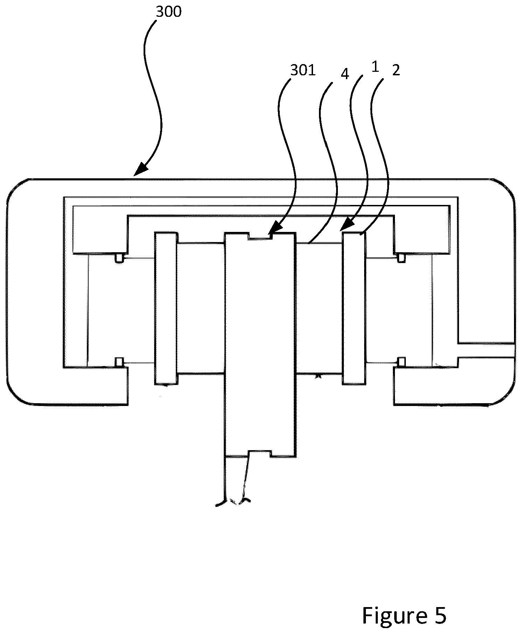

Figure 5 illustrates an example aspect of a caliper structure 300 for illustrative purpose i.e. being non-limiting to the scope of the disclosure herein. The caliper system 300 comprising a BPA 1 for contacting a disc 301. The caliper structure 300 may comprise a caliper, pistons in contact with the back plates and a hydraulic channel in case it's a hydraulic disc brake.

## Claims

1. A brake pad assembly (1) for a disc brake of a vehicle comprising:
- a back plate (2) comprising an outer surface (2a) and an opposing inner surface (2b);
- a shim plate (3); and
- a friction pad (4) associated with said inner surface (2b);
wherein the shim plate (3) is at least partially embedded in said back plate (2), wherein the shim plate (3) is positioned intermediate the friction pad (4) and the outer surface (2a) of the back plate (2).

2. The brake pad assembly (1) according to claim 1, wherein the back plate (2) is formed by a first material and wherein the shim plate (3) is formed by a second material different from the first material.

3. The brake pad assembly (1) according to claim 1 or 2, wherein the shim plate (3) is formed by a metallic material, an alloy material, a polymer or any combination thereof, and/or wherein the back plate (2) is formed by a composite material.

4. The brake pad assembly (1) according to any one of the preceding claims, wherein the shim plate (3) is fully embedded in said back plate (2).

5. The brake pad assembly (1) according to any one of the preceding claims, wherein the shim plate (3) is positioned intermediate said inner surface (2b) and said outer surface (2a) of said back plate (2).

6. The brake pad assembly (1) according to claim 5, wherein the back plate (2) comprises at least one slot, wherein at least a part of the shim plate (3) protrudes from said slot or wherein said slot exposes at least a part of said shim plate (3).

7. The brake pad assembly (1) according to any one of the preceding claims, wherein the back plate (2) comprises a receiving cavity (5) constrained by said inner surface (2a) of said back plate (2), wherein the shim plate (3) is accommodated by said receiving cavity (5) such that the friction pad (4) is attachable to said shim plate (3), preferably the receiving cavity (5) is dimensioned to correspond to at least 70% of an outer contour of said shim plate (3).

8. The brake pad assembly (1) according to claim 6, wherein the receiving cavity (5) forms a depth being equal to or greater than a thickness of said shim plate.

9. The brake pad assembly according to any one of the preceding claims, wherein a shim surface (3a) of said shim plate (3) extends over at least 70 percent of any of the surfaces (2a, 2b) of said back plate (2).

10. The brake pad assembly (1) according to any one of the preceding claims, wherein a contact surface (4a) of said friction pad (4) extends over at least 70 percent of any of the surfaces (2a, 2b) of said back plate (2).

11. The brake pad assembly (1) according to any one of the preceding claims, wherein a thickness (t1) of the brake pad assembly (1) is defined by a space between a contact surface (4a) of said friction pad (4) and the outer surface (2a) of said back plate (2).

12. A vehicle (200) comprising at least one brake pad assembly (1) according to any one of the claims 1-9.

13. A method (100) for manufacturing the brake pad assembly according to any one of the preceding claims, comprising the steps of:
- providing (101) a shim plate
- moulding (102), by a moulding apparatus, at least a layer of said back plate wherein the layer of the back plate forms at least a part of a final thickness of said back plate;
- placing (103) the shim plate on said back plate;
- providing (105) a friction material onto the back plate and/or the shim plate;
- curing (106) the friction material and the at least one layer.

14. The method (100) according to claim 11, wherein prior to the step of providing (105), moulding (104) at least an additional layer of said back plate, thereby fully embedding the shim plate within said back plate.

15. Use of a brake pad assembly (1) according to any one of the claims 1-9 in a vehicle.
